# FASCICULE DE BREVET EUROPEEN

(11) **EP 0 278 835 B1**
(45) Date de publication et mention de la délivrance du brevet: **19.05.1993**
(21) Numéro de dépôt: 88400175.1
(22) Date de dépôt: 27.01.1988
(51) Int. Cl.: H04B 10/00

(54) **Système pour la commande à distance d'un dispositif électrique par voie optique**
System zur optischen Abstandsteuerung einer elektrischen Vorrichtung
Optical remote control of an electrical device

(30) Priorité: 28.01.1987 FR 8701004
(43) Date de publication de la demande: 17.08.1988
(73) Titulaire: AEROSPATIALE Société Nationale Industrielle, 75781 Paris Cédex 16 (FR)
(72) Inventeur: Maisonneuve, Jean-Michel, F-31200 Toulouse (FR); Lacan, Francis, F-12130 Saint Geniez d'Olt (FR); Domergue, Jean-Paul, F-31300 Toulouse (FR)
(74) Mandataire: Bonnetat, Christian

(56) Documents cités:
- EP-A- 0 053 790
- EP-A- 0 075 701
- GB-A- 2 064 112
- GB-A- 2 165 712
- PATENT ABSTRACTS OF JAPAN, vol. 4, no. 44 (E-5)[526], 5 avril 1980 & JP-A-55 16 552

## Description

La présente invention concerne un système pour la commande à distance d'un dispositif électrique par voie optique.

Par le document EP-A-0 075701, on connaît déjà un système destiné à la commande à distance d'un dispositif électrique et comportant, d'une part, un dispositif d'émission pourvu d'une source d'alimentation électrique, d'un générateur engendrant des informations électriques destinées à la commande dudit dispositif électrique, d'un premier convertisseur électro-optique pour transformer lesdites informations électriques en informations optiques ainsi que d'un second convertisseur électro-optique pour convertir l'énergie électrique de ladite source d'alimentation en énergie optique et, d'autre part, un dispositif de réception pourvu d'un premier convertisseur opto-électrique susceptible de retransformer lesdites informations optiques en informations électriques pour commander ledit dispositif électrique, d'un second convertisseur opto-électrique relié optiquement audit second convertisseur électro-optique et susceptible de reconvertir l'énergie optique en énergie électrique, et d'un accumulateur d'énergie électrique susceptible de stocker l'énergie électrique délivrée par ledit second convertisseur opto-électrique et d'alimenter en énergie électrique, au moins partiellement, le dispositif électrique, ledit dispositif électrique commandé par ledit dispositif de réception comportant un appareil électrique et un dispositif de commande électronique pilotant ledit appareil.

La présente invention a pour objet un système de ce type, permettant de limiter la puissance transmise par voie optique.

A cette fin, selon l'invention, le système du type mentionné ci-dessus est caractérisé en ce que ledit dispositif de commande électronique est de type numérique séquentiel, en ce que ledit générateur du dispositif d'émission émet des informations numériques séquentielles et en ce que ledit dispositif de commande électronique, à la fois, fournit audit appareil électrique les informations séquentielles engendrées par ledit premier convertisseur opto-électrique et commande l'alimentation dudit appareil électrique, de façon que celui-ci ne soit alimenter pleinement à partir dudit accumulateur d'énergie que pendant l'exploitation de chaque séance d'informations reçues dudit premier convertisseur opto-électrique.

Ainsi, ledit dispositif de commande électrique a un double rôle, l'un dans la transmission et le décodage des informations reçues, l'autre dans l'alimentation de l'appareil électrique. C'est ce double rôle qui, dans l'état actuel de la technologie, permet la réalisation pratique du système de l'invention. Dans le système de l'invention, les signaux de commande de l'alimentation de l'appareil électrique sont les mêmes que ceux fournissant les informations à celui-ci et la charge de l'accumulateur du récepteur n'est pas dépendante des périodes de fonctionnement dudit appareil électrique.

La présente invention concerne donc un système du type mentionné ci-dessus, dans lequel le récepteur, bien que dépourvu de source d'alimentation électrique locale ou bien pourvu d'une source électrique locale épuisable, permet une exploitation complexe du signal d'informations électriques transmis optiquement par l'émetteur. Quoique d'application générale, ce système conforme à l'invention est particulièrement approprié à faire fonctionner, à piloter ou à surveiller un appareil électrique disposé dans une partie d'un avion non pourvue de source électrique. Un tel appareil peut, par exemple, être un capteur, une servovalve, un afficheur à écran ou analogue. La présente invention est également particulièrement intéressante à mettre en oeuvre pour le pilotage de la sonnerie des postes téléphoniques des réseaux optiques.

Afin de réduire au maximum la consommation d'énergie électrique du côté du dispositif de réception, il est avantageux que ledit dispositif de commande électronique commande son propre fonctionnement suivant une alternance de phases de veille et de pleine activité.

De préférence, ledit dispositif électronique numérique et ledit générateur du dispositif d'émission comportent chacun un micro-processeur.

Pour la transmission des informations numériques entre le dispositif d'émission et le dispositif de réception, le premier convertisseur électro-optique du dispositif d'émission peut être une diode électro-luminescente, tandis que le premier convertisseur opto-électrique du dispositif de réception peut être soit du type photovoltaïque, soit, lorsque le débit des informations numériques est important, du type photoconducteur, par exemple une photodiode de type PIN.

A des fins de faible consommation d'énergie, on peut réaliser ledit dispositif de commande électronique en technologie CMOS.

Le second convertisseur électro-optique du dispositif d'émission pourrait être de type thermique. Toutefois, il est préférable qu'il soit constitué par une diode laser.

Avantageusement, le second convertisseur opto-électrique du dispositif de réception est du type photodiode photovoltaïque, bien entendu adapté au second convertisseur électro-optique. Afin de pouvoir obtenir en sortie dudit convertisseur opto-électrique une tension suffisante (par exemple de l'ordre de 5V) au fonctionnement de l'électronique du dispositif de réception, il est avantageux que le second convertisseur opto-électrique soit formé par le montage en série d'une pluralité de photodiodes fonctionnant en régime photovoltaïque.

La disposition des photodiodes et le montage électrique adoptés sont évidemment fonction, respectivement, de la répartition spatiale du rayonnement reçu, ainsi que du niveau et du signe de la tension souhaités.

L'accumulateur d'énergie du dispositif de réception peut être un condensateur (associé à une résistance de charge), ou une photopile. Il peut constituer à lui seul la source de puissance nécessaire à l'alimentation électrique du dispositif de réception, ou bien encore servir à maintenir la charge d'une source de puissance, du type batterie d'accumulateurs, prévue dans le dispositif de réception. Ainsi, ledit accumulateur d'énergie électrique soit alimente totalement le dispositif électrique, soit participe à l'alimentation de celui-ci.

De préférence, notamment afin d'éviter des pertes de puissance qui résultent du couplage entre les signaux de puissance et les signaux d'informations, la voie optique comporte deux agencements de fibre optique indépendants, respectivement affectés à la transmission des informations optiques et à celle de l'énergie optique.

Les figures du dessin annexé feront bien comprendre comment l'invention peut être réalisée. Sur ces figures, des références identiques désignent des éléments semblables.

La figure 1 est le schéma synoptique d'ensemble d'un système pour la commande à distance d'un dispositif électrique par voie optique.

La figure 2 est le schéma synoptique d'une variante du système pour la commande à distance d'un dispositif électrique par voie optique.

La figure 3 montre un mode de réalisation, conformément à l'invention, du second convertisseur opto-électrique du dispositif de réception.

La figure 4 donne le schéma synoptique du générateur d'informations du dispositif d'émission, associé au premier convertisseur électro-optique.

La figure 5 illustre un mode de réalisation de la commande dudit générateur.

La figure 6 est le schéma synoptique, conformément à l'invention, du dispositif électrique du dispositif de réception, associé au premier convertisseur opto-électrique.

La figure 7 illustre un exemple d'informations transmises entre le dispositif d'émission et le dispositif de réception.

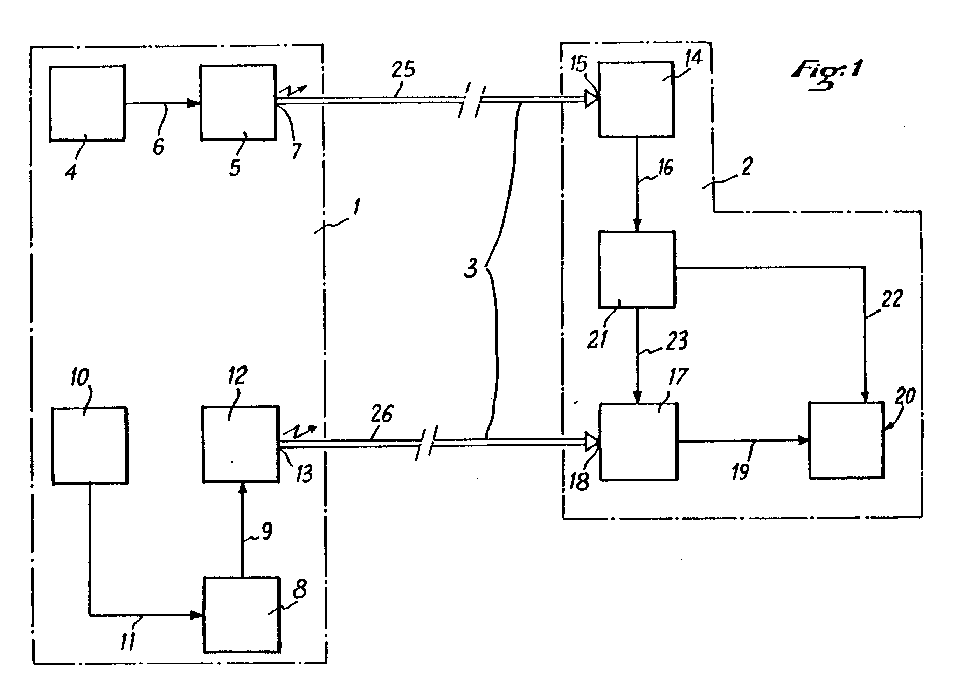

Le système pour la commande à distance d'un dispositif électrique par voie optique, illustré schématiquement par la figure 1, comporte un dispositif d'émission 1 et un dispositif de réception 2, éloignés l'un de l'autre et couplés par une voie optique 3. Le dispositif de réception 2 est éloigné de toute source d'alimentation électrique et il est alimenté, aussi bien en puissance électrique qu'en informations, à partir du dispositif d'émission 1, par l'intermédiaire de la voie optique 3.

Le dispositif d'émission 1 comporte :
- une source d'alimentation électrique, ou source de puissance électrique, 4 ;
- un convertisseur électro-optique de puissance 5, recevant la puissance électrique de la source d'alimentation 4, à son entrée 6, et susceptible de convertir en continu l'énergie électrique de ladite source 4, de manière à délivrer, à sa sortie 7, une énergie optique représentative de l'énergie électrique émise par la source 4 ;
- un générateur électrique 8, susceptible d'émettre séquentiellement à sa sortie 9, des informations numériques ;
- une autre source d'alimentation électrique 10, susceptible d'alimenter ledit générateur 8 par l'intermédiaire d'une liaison 11. La source 10 peut faire partie de la source 4 ou bien en être indépendante ; et
- un convertisseur électro-optique d'informations 12, recevant les informations numériques séquentielles apparaissant à la sortie 9 du générateur 8, pour les convertir en informations optiques qu'il délivre à sa sortie 13.

Les différents éléments 4, 5, 8, 10 et 12 du dispositif d'émission 1 peuvent être physiquement indépendants les uns des autres et être relativement espacés, ou bien au contraire être proches les uns des autres et éventuellement rassemblés en une unité unique.

Par ailleurs, le dispositif de réception 2 comporte :
- un convertisseur opto-électrique de puissance 14 recevant à son entrée 15, à travers la voie optique 3, l'énergie optique disponible à la sortie 7 du convertisseur électro-optique de puissance 5 et délivrant à sa sortie 16 de l'énergie électrique ;
- un convertisseur opto-électrique d'informations 17 recevant à son entrée 18, à travers la voie optique 3, les informations séquentielles optiques disponibles à la sortie 13 du convertisseur électro-optique d'informations 12 et délivrant à sa sortie 19 des informations électriques séquentielles numériques ;
- un dispositif électrique utilisateur 20, recevant lesdites informations séquentielles numériques ; et
- un accumulateur d'énergie électrique 21, du type condensateur ou photopile, recevant l'énergie électrique disponible à la sortie 16 du convertisseur opto-électrique de puissance 14 et alimentant en puissance, par la ligne 22, le dispositif utilisateur 20. Eventuellement, par l'intermédiaire d'une ligne 23, l'accumulateur d'énergie électrique 21 alimente le second convertisseur opto-électrique 17, lorsque la nature de celui-ci exige une alimentation.

On voit ainsi que le dispositif utilisateur 20 reçoit du dispositif d'émission 1, par l'intermédiaire de la voie optique 3, à la fois l'énergie électrique et les informations électriques nécessaires à son fonctionnement.

Dans la variante de réalisation montrée par la figure 2, le dispositif de réception 2 comporte une source d'alimentation électrique 24 du type batterie d'accumulateurs ou pile rechargeable, chargé d'alimenter le dispositif utilisateur 20 et, éventuellement, le convertisseur opto-électrique d'informations 17. Dans cette variante de réalisation, l'énergie électrique apparaissant à la sortie 16 du premier convertisseur opto-électrique de puissance 14 est adressée à ladite source 24, pour en maintenir la charge. Le dispositif d'émission 1 du système de la figure 2 peut être identique à celui du système de la figure 1.

Bien entendu, les différents éléments 14, 17, 20 et 21 ou 24 du dispositif de réception 2 peuvent, comme pour les éléments du dispositif d'émission 1, être physiquement indépendants les uns des autres et être relativement espacés, ou bien au contraire être proches les uns des autres et même être rassemblés en une unité unique.

Par ailleurs, sur les figures 1 et 2, on a représenté la voie optique de couplage 3 sous la forme de deux fibres optiques indépendantes 25 et 26, la première reliant la sortie 7 du convertisseur électro-optique de puissance 5 à l'entrée 15 du convertisseur opto-électrique de puissance 14 et la seconde couplant la sortie 13 du convertisseur électro-optique d'informations 12 à l'entrée 18 du convertisseur opto-électrique d'informations 17. Cette représentation n'illustre qu'un mode de réalisation possible pour la voie optique 3, qui pourrait, par exemple, être réalisée à l'aide d'un faisceau optique directif, ou bien au moyen d'un unique ensemble à fibres optiques associé, à ses extrémités, à des commutateurs ou coupleurs appropriés (non représentés), ou, encore, au moyen d'une seule fibre optique.

Toutefois, il est particulièrement avantageux d'utiliser des fibres optiques indépendantes 25 et 26 pour véhiculer respectivement la puissance et les informations séquentielles, car alors on évite les pertes de puissance qui résultent du couplage des signaux d'informations et des signaux de puissance. En outre, il est plus facile d'adapter chaque fibre à sa fonction spécifique.

Le convertisseur électro-optique de puissance 5 des systèmes des figures 1 et 2 peut être une simple lampe à incandescence ou une autre source lumineuse thermique puissante analogue. Cependant, ce convertisseur peut également être constitué par une diode laser. En revanche, il n'est pratiquement pas possible d'utiliser une diode électroluminescente à cause de la faible puissance émise par une telle diode.

Quel que soit le choix réalisé pour le convertisseur électro-optique 5, il va de soi que le convertisseur opto-électrique de puissance 14 doit lui être adapté au mieux, afin que le rendement de transmission de puissance soit aussi bon que possible.

Un tel convertisseur opto-électrique de puissance 14, associé à son accumulateur d'énergie 21 ou 24, pourrait être une photopile. Toutefois, on a trouvé qu'il était avantageux que ledit convertisseur opto-électrique 14 soit du type à photodiode, par exemple de silicium ou d'arséniure de gallium, fonctionnant en régime photovoltaïque. Dans ce dernier cas, afin d'obtenir à la sortie de l'accumulateur d'énergie 21 un niveau de tension, par exemple égal à 5V, nécessaire à l'alimentation du dispositif utilisateur 20, on agence plusieurs de telles photodiodes en série.

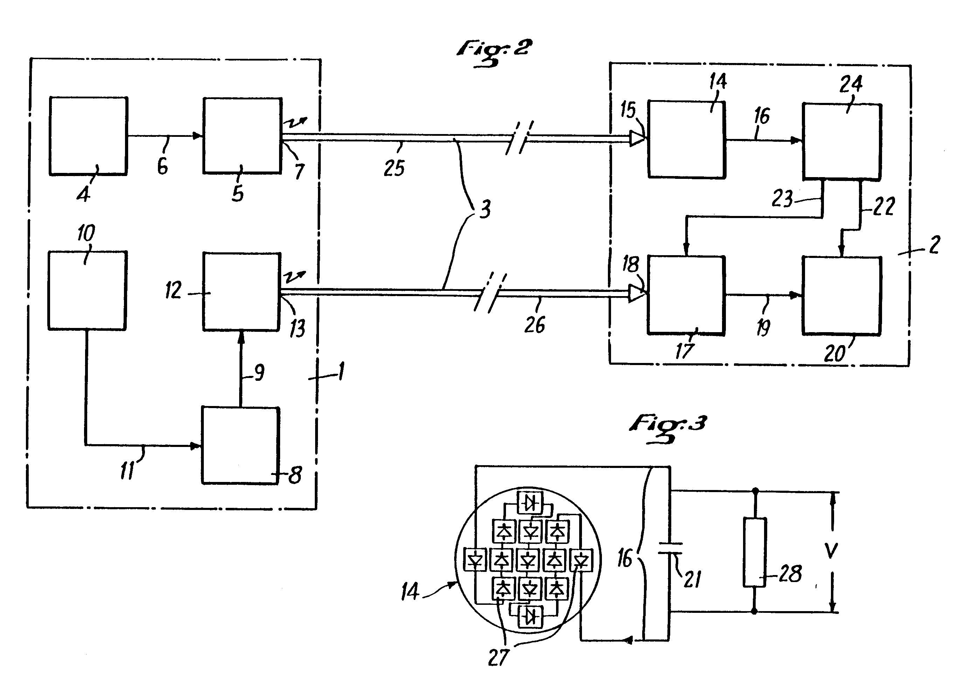

Sur la figure 3, on a représenté un exemple de réalisation du convertisseur opto-électrique 14 constitué d'une pluralité de photodiodes 27 montées en série, conformément à une particularité de la présente invention. Dans ce cas, l'accumulateur d'énergie 21 (relié aux photodiodes 27 par la liaison 16) est un condensateur, qui est associé à une résistance de charge 28. Aux bornes de la résistance de charge 28 apparaît la tension V, destinée à alimenter le dispositif utilisateur 20 et, éventuellement, le convertisseur opto-électrique d'informations 17.

Dans ces conditions, on peut disposer à la sortie 16 du convertisseur opto-électrique 14 d'une puissance au moins égale à 500 µW, par exemple un courant de 100 µA sous 5V, ce qui est suffisant pour alimenter une électronique TTL. Le rendement du convertisseur 14 étant de l'ordre de 15 %, il est alors nécessaire que celui-ci reçoive, par la fibre optique 25, une puissance d'au moins 3,50 mW. En supposant (comme dans un dispositif expérimental réalisé) que l'atténuation introduite par ladite fibre optique est de l'ordre de 20 dB, cela implique que le convertisseur électro-optique 5 émette une puissance de 350 mW, ce qui est facilement obtenu par la mise en oeuvre de diodes laser.

La fibre optique 25 a, par exemple, un diamètre de coeur égal à 500 µm lorsque le convertisseur électro-optique 5 est de type thermique. Si ce convertisseur est une diode laser, le diamètre de la fibre optique 25 peut être réduit.

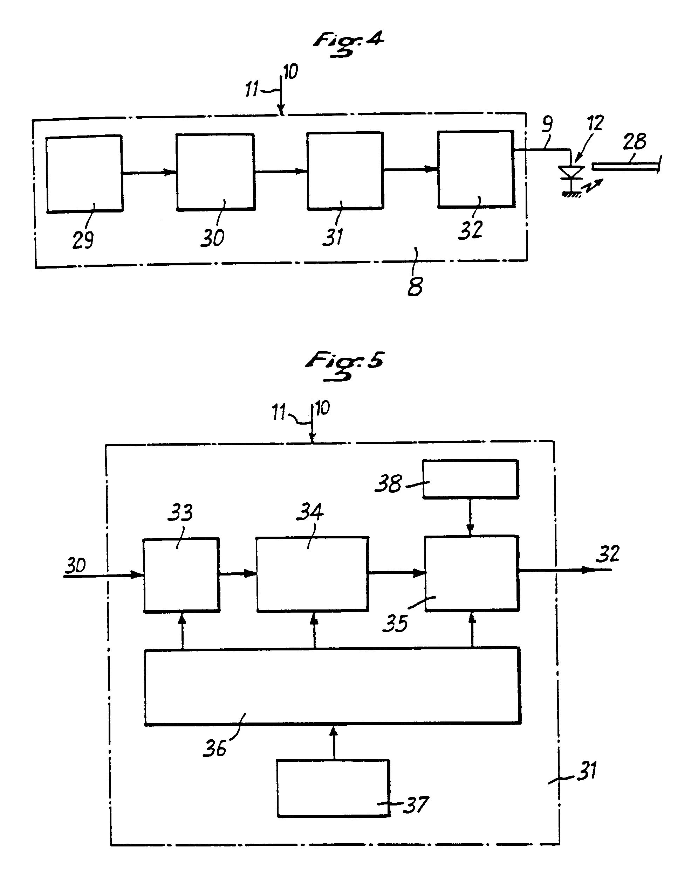

Comme le montre la figure 4, le générateur d'informations numériques 8 comprend, par exemple, un capteur ou détecteur analogique 29, dont le signal analogique est mis en forme par un dispositif de mise en forme 30, puis numérisé dans un dispositif de numérisation, de sérialisation et de codage 31. Le signal numérique ainsi obtenu est alors transmis à un générateur de courant 32, attaquant le convertisseur électro-optique d'informations 12, qui, dans ce cas, est avantageusement une diode électroluminescente. Chacun des éléments 29 à 32 est alimenté par la source 10.

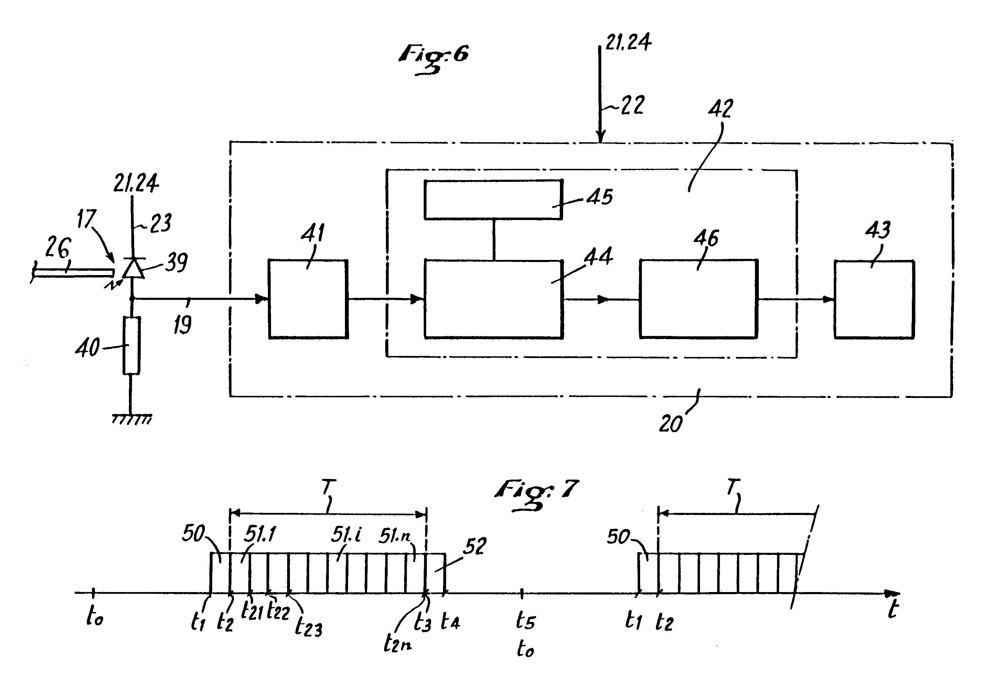

Dans le mode de réalisation illustré par la figure 5, le dispositif de numérisation, de sérialisation et de codage 31 comporte un échantillonneur 33 recevant le signal analogique mis en forme par le dispositif 30, un convertisseur analogique-numérique 34 recevant le signal échantillonné par ledit échantillonneur 33 et un émetteur série asynchrone 35 recevant le signal de sortie dudit convertisseur analogique-numérique 34 et commandant le générateur de courant 32. Un compteur-décodeur 36 assure la synchronisation de cycle des trois dispositifs 33, 34 et 35, tandis que des oscillateurs 37 et 38 pilotent respectivement le compteur-décodeur 36 et l'émetteur série asynchrone 35. De préférence, le dispositif de numérisation, de sérialisation et de codage 31 est réalisé sous la forme d'un microprocesseur.

Le convertisseur opto-électrique d'information 17 peut, de même que le convertisseur opto-électrique 14, être du type photovoltaïque, ce qui permet d'éviter une alimentation électrique à partir des accumulateurs 21 et 24, à travers la ligne 23. Toutefois, afin de satisfaire à des conditions de débits (par exemple 100 Kbit/s), il est parfois utile, conformément à une autre particularité de la présente invention, de réaliser ce convertisseur 17 sous la forme d'une photodiode de type PIN, nécessitant une polarisation à partir desdits accumulateurs 21 ou 24. Une telle réalisation est par exemple montrée sur la figure 6, sur laquelle la diode PIN porte la référence 39 et est associée à une résistance 40.

La fibre optique 26, assurant la liaison optique entre les convertisseurs 12 et 17 est, par exemple, en silice avec un diamètre de coeur de l'ordre de 100 µm.

La puissance reçue par le convertisseur opto-électrique d'informations 17 peut être de l'ordre du microwatt.

Sur la figure 6, est représenté le schéma d'un dispositif utilisateur 20 constituant la particularité essentielle de la présente invention. Le dispositif utilisateur 20 comporte essentiellement un dispositif 41 pour la mise en forme des informations séquentielles délivrées par le convertisseur opto-électrique 17 à sa sortie 19, un dispositif 42 pour la synchronisation, pour l'échantillonnage et pour la désérialisation de ces informations séquentielles et un appareil 43 (afficheur, actuateur, moteur, etc...) utilisant lesdites informations.

Le dispositif 42, qui est de préférence réalisé par un microprocesseur de technologie CMOS, comporte un récepteur série asynchrone 44, piloté par un oscillateur 45 et associé à un décodeur 46.

Lorsqu'il est mis sous tension (grâce aux sources 4 et 10), le dispositif d'émission 1, d'une part, adresse de l'énergie par la fibre optique 25 au dispositif de réception 2, et, d'autre part, répète en permanence un cycle des deux fonctions suivantes :
- mesure du signal (tension) électrique délivré par le capteur 29 ;
- transmission de cette mesure en mode série au dispositif de réception, par l'intermédiaire de la fibre optique 26, puis attente du cycle suivant.

Le séquencement de ces fonctions est assuré par le microprocesseur 31, qui est par exemple du type MOTOROLA MC 68 705 U3L.

Le microprocesseur 31 commande la diode d'émission 12 (par exemple du type RTC CQF 34) en commutant son courant de polarisation à l'aide d'un transistor (non représenté) incorporé au générateur de courant 32. La diode électroluminescente 12 émet de la lumière lorsque un niveau logique positif est présenté par le microprocesseur 31.

Le signal lumineux émis par la diode 12 est, par exemple, codé de la façon illustrée sur le chronogramme de la figure 7 :
. au début d'un cycle, entre les instants to et t1, le microprocesseur 31 fait l'acquisition de la mesure effectuée par le capteur 29 et la commande de la diode 12 est inactive ;
. lorsque l'acquisition de la mesure est terminée, la commande de la diode 12 est active entre les instants t1 et t2 (par exemple distants de 200 µs), de sorte que celle-ci émet un bit lumineux 50 ;
. ensuite, pendant une durée T comprise entre les instants t2 et t3, la commande de la diode 12 est commandée en correspondance avec la mesure effectuée par le capteur 29, de sorte qu'il apparaît une pluralité de bits 51.1 à 51.n lumineux (par exemple au nombre de huit) représentatifs du codage binaire de ladite mesure ;
. à la suite de l'instant t3, entre cet instant et l'instant suivant t4, la commande de la diode 12 est active pour délivrer un bit lumineux 52.
. enfin, de l'instant t4 à l'instant t5 de fin de cycle, la commande de la diode 12 redevient inactive.

L'instant initial to du cycle suivant correspond à l'instant t5 de fin du cycle précédent.

Ces séquences de bits lumineux 50,51.i (avec 1≦ i ≦n) et 52 sont transmis par la fibre optique 26 au convertisseur 17 qui les transforme en séquences correspondantes de bits électriques.

Le microprocesseur 42, qui peut être de conception identique au microprocesseur 31 mais qui est réalisé en technologie CMOS, contrôle l'alimentation de puissance de l'appareil 43 à partir de l'accumulateur 21 (ou 24), de façon que cette alimentation n'ait lieu, à plein, que lorsque ledit appareil exploite les informations 50,51.i et 52. En dehors de l'apparition de ces informations, le microprocesseur peut :
. soit supprimer totalement l'alimentation électrique dudit appareil 43 ;
. soit alimenter celui-ci sous une tension moindre, dans le cas où ledit appareil nécessite une alimentation de maintien entre deux séquences de telles informations.

On abaisse ainsi encore la consommation'lectrique du dispositif de réception 2.

Dans certains cas, on peut de plus, à la même fin, faire fonctinner ledit microprocesseur 42 selon une alternance de périodes d'activité et de périodes de veille. Dès qu'il est en activité et qu'il reçoit des informations 50,51.i et 52, le microprocesseur 42 compte celles-ci pour savoir s'il reçoit un message complet, ou bien s'il a été mis en activité alors qu'une partie desdites informations avaient déjà été émises pendant sa période de veille précédente. Dans ce dernier cas, le microprocesseur 42 attend la séquence d'informations suivantes avant de se remettre en veille.

## Revendications

1. Système destiné à la commande à distance d'un dispositif électrique (20) et comportant, d'une part, un dispositif d'émission (1) pourvu d'une source d'alimentation électrique (4), d'un générateur (8) engendrant des informations électriques destinées à la commande dudit dispositif électrique (20), d'un premier convertisseur électro-optique (12) pour transformer lesdites informations électriques en informations optiques ainsi que d'un second convertisseur électro-optique (5) pour convertir l'énergie électrique de ladite source d'alimentation (4) en énergie optique et, d'autre part, un dispositif de réception (2) pourvu d'un premier convertisseur opto-électrique (17) susceptible de retransformer lesdites informations optiques en informations électriques pour commander ledit dispositif électrique (20), d'un second convertisseur opto-électrique (14) relié optiquement audit second convertisseur électro-optique (5) et susceptible de reconvertir l'énergie optique en énergie électrique, et d'un accumulateur d'énergie électrique (21,24) susceptible de stocker l'énergie électrique délivrée par ledit second convertisseur opto-électrique (14) et d'alimenter en énergie électrique, au moins partiellement, le dispositif électrique (20), ledit dispositif électrique (20) commandé par ledit dispositif de réception (2) comportant un appareil électrique (43) et un dispositif de commande électronique (42) pilotant ledit appareil,
caractérisé en ce que ledit dispositif de commande électronique (42) est de type numérique séquentiel, en ce que ledit générateur (8) du dispositif d'émission (1) émet des informations numériques séquentielles et en ce que ledit dispositif de commande électronique (42), à la fois, fournit audit appareil électrique (43) les informations séquentielles engendrées par ledit premier convertisseur opto-électrique (17) et commande l'alimentation dudit appareil électrique (43), de façon que celui-ci ne soit alimenté pleinement à partir dudit accumulateur d'énergie (21,24) que pendant l'exploitation de chaque séquence d'informations reçues dudit premier convertisseur opto-électrique (17).

2. Système selon la revendication 1,
caractérisé en ce que ledit dispositif de commande électronique (42) commande son propre fonctionnement suivant une alternance de phases de veille et de pleine activité.

3. Système selon l'une des revendications 1 ou 2,
caractérisé en ce que ledit dispositif électronique numérique (42) comporte un microprocesseur.

4. Système selon l'une des revendications 1 à 3,
caractérisé en ce que ledit premier convertisseur opto-électrique (17) du dispositif de réception (2) est une photodiode de type PIN.

5. Système selon l'une des revendications 1 à 4,
caractérisé en ce que ledit générateur (8) du dispositif d'émission (1) comporte un microprocesseur.

6. Système selon l'une des revendications 1 à 5,
caractérisé en ce que ledit dispositif de commande électronique (42) est réalisé en technologie CMOS.

7. Système selon l'une des revendications 1 à 6,
caractérisé en ce que ledit second convertisseur électro-optique (5) est une diode laser.

8. Système selon l'une des revendications 1 à 7,
caractérisé en ce que ledit second convertisseur opto-électrique (14) est formé par le montage en série d'une pluralité de photodiodes (27) fonctionnant en régime photovoltaïque.

9. Système selon l'une quelconque des revendicaitons 1 à 8,
caractérisé en ce que ledit accumulateur d'énergie (21,24) est un condensateur.

10. Système selon l'une quelconque des revendications 1 à 8,
caractérisé en ce que ledit accumulateur d'énergie (21,24) est une photopile.

11. Système selon l'une quelconque des revendications 1 à 10,
caractérisé en ce que ledit accumulateur d'énergie (21,24) délivre l'alimentation électrique totale dudit dispositif électrique (20).

12. Système selon l'une quelconque des revendications 1 à 10,
caractérisé en ce que ledit accumulateur d'énergie (21,24) participe à l'alimentation électrique dudit dispositif électrique (20).

13. Système selon l'une quelconque des revendications 1 à 12,
caractérisé en ce que la voie optique (3) reliant ledit dispositif d'émission (1) et ledit dispositif de réception (2) comporte deux agencements de fibre optique (25,26) indépendants, respectivement affectés à la transmission desdites informations optiques et à celle de l'énergie optique.

## Claims

1. System intended for the remote control of an electrical device (20) and comprising, on the one hand, a sending device (1) provided with an electrical supply source (4), with a generator (8) generating electrical information intended for the control of the said electrical device (20), with a first electro-optical converter (12) for transforming the said electrical information into optical information as well as with a second electro-optical converter (5) for converting the electrical energy from the said supply source (4) into optical energy and, on the other hand, a reception device (2) provided with a first opto-electrical converter (17) capable of retransforming the said optical information into electrical information in order to control the said electrical device (20), with a second opto-electrical converter (14) optically linked to the said second electro-optical converter (5) and capable of reconverting the optical energy into electrical energy, and with an electrical energy accumulator (21, 24) capable of storing the electrical energy delivered by the said second opto-electrical converter (14) and of supplying the electrical device (20) at least partially with electrical energy, the said electrical device (20) controlled by the said reception device (2) comprising an electrical apparatus (43) and an electronic control device (42) driving the said apparatus, characterised in that the said electronic control device (42) is of the sequential digital type, in that the said generator (8) of the sending device (1) sends sequential digital information and in that the said electronic control device (42), both supplies the said electrical apparatus (43) with the sequential information generated by the said first opto-electrical converter (17) and controls the supply to the said electrical apparatus (43), in such a way that the latter is fully supplied from the said energy accumulator (21, 24) only during the exploitation of each sequence of information received from the said first opto-electrical converter (17).

2. System according to Claim 1, characterised in that the said electronic control device (42) controls its own operation according to an alternation of standby and full activity phases.

3. System according to one of Claims 1 or 2, characterised in that the said digital electronic device (42) comprises a microprocessor.

4. System according to one of Claims 1 to 3, characterised in that the said first opto-electrical converter (17) of the reception device (2) is a PIN-type photodiode.

5. System according to one of Claims 1 to 4, characterised in that the said generator (8) of the sending device (1) comprises a microprocessor.

6. System according to one of Claims 1 to 5, characterised in that the said electronic control device (42) is produced in CMOS technology.

7. System according to one of Claims 1 to 6, characterised in that the said second electro-optical converter (5) is a laser diode.

8. System according to one of Claims 1 to 7, characterised in that the said second opto-electrical converter (14) is formed by the series mounting of a plurality of photodiodes (27) operating in photovoltaic regime.

9. System according to any one of Claims 1 to 8, characterised in that the said energy accumulator (21, 24) is a capacitor.

10. System according to any one of Claims 1 to 8, characterised in that the said energy accumulator (21, 24) is a photocell.

11. System according to any one of Claims 1 to 10, characterised in that the said energy accumulator (21, 24) delivers the total electrical supply to the said electrical device (20).

12. System according to any one of Claims 1 to 10, characterised in that the said energy accumulator (21, 24) participates in the electrical supply to the said electrical device (20).

13. System according to any one of Claims 1 to 12, characterised in that the optical path (3) linking the said sending device (1) and the said reception device (2) comprises two independent optical fibre arrangements (25, 26) respectively assigned to the transmission of the said optical information and to that of the optical energy.

## Patentansprüche

1. System zur Fernbedienung einer elektrischen Einrichtung (20) das, einerseits, eine Sendeeinrichtung (1) enthält mit einer elektrischen Versorgungsquelle (4), einem Generator (8) welcher die zur Steuerung der genannten elektrischen Einrichtung (20) bestimmten elektrische Informationen erzeugt, einem ersten elektro-optischen Wandler (12) zur Umsetzung der besagten elektrischen Informationen in optische Informationen, sowie einem zweiten elektro-optischen Wandler (5) zur Umwandlung der elektrischen Energie der genannten Versorgungsquelle (4) in optische Energie und, andererseits, eine Empfangseinrichtung (2) mit einem ersten opto-elektrischen Wandler (17) zur Rückumsetzung genannter optischen Informationen in elektrische Informationen zur Steuerung der genannten elektrischen Einrichtung (20), einem zweiten opto-elektrischen Wandler (14) welcher optisch mit dem zweiten elektro-optischen Wandler (5) verbunden ist zur Rückumwandlung der optischen Energie in elektrische Energie, und einem Akkumulator für elektrische Energie (21, 24) zum Speichern der vom zweiten opto-elektrischen Wandler (14) ausgegebenen elektrischen Energie und zur Versorgung mit elektrischer Energie, wenigstens teilweise, der elektrischen Einrichtung (20), wobei die elektrische Einrichtung (20) die von der genannten Empfangseinrichtung (2) gesteuert wird, ein elektrisches Gerät (43) und ein elektronisches Steuergerät (42) enthält welches besagtes Gerät steuert,
dadurch gekennzeichnet, daß genanntes elektronische Steuergerät (42) von der numerisch, sequentiellen Art ist, daß genannter Generator (8) der Sendeeinrichtung (1) numerisch-sequentielle Informationen ausgibt und daß genanntes elektronische Steuergerät (42) dem genannten elektrischen Gerät (43) die vom genannten ersten opto-elektrischen Wandler (17) erzeugten sequentiellen Informationen liefert und die Versorgung des genannten Steuergerätes (43) steuert, so daß dieses voll über den genannten Energieakkumulator (21, 24) versorgt wird nur während des Betriebs jeder Sequenz von Informationen welche das Gerät vom ersten opto-elektrischen Wandler (17) erhalten hat.

2. System nach dem Anspruch 1,
dadurch gekennzeichnet, daß genannte elektrische Steuereinrichtung (42) ihren eigenen Betrieb steuert gemäß einer Wechselfolge von Ruhe- und vollen Wirkungsphasen.

3. System nach einem der Ansprüche 1 oder 2,
dadurch gekennzeichnet, daß genannte numerische, elektronische Einrichtung (42) einen Mikroprozessor enthält.

4. System nach einem der Ansprüche 1 bis 3,
dadurch gekennzeichnet, daß der erste opto-elektrische Wandler (17) der Empfangseinrichtung (2) eine PIN-Photodiode ist.

5. System nach einem der Ansprüche 1 bis 4,
dadurch gekennzeichnet, daß der genannte Generator (8) der Sendeeinrichtung (1) einen Mikroprozessor enthält.

6. System nach einem der Ansprüche 1 bis 5,
dadurch gekennzeichnet, daß genannte elektronische Steuereinrichtung (42) in CMOS-Technologie ausgeführt ist.

7. System nach einem der Ansprüche 1 bis 6,
dadurch gekennzeichnet, daß genannter zweite elektro-optische Wandler (5) eine Laserdiode ist.

8. System nach einem der Ansprüche 1 bis 7,
dadurch gekennzeichnet, daß genannter zweite opto-elektrische Wandler (14) durch Serienschaltung einer Vielzahl von Photodioden (27), die photo-voltaisch betrieben werden, gebildet ist.

9. System nach irgend einem der Anpsrüche 1 bis 8,
dadurch gekennzeichnet, daß genannter Energieakkumulator (21, 24) ein Kondensator ist.

10. System nach irgend einem der Ansprüche 1 bis 8,
dadurch gekennzeichnet, daß genannter Engergieakkumulator (21, 24) eine Photozelle ist.

11. System nach irgend einem der Ansprüche 1 bis 10,
dadurch gekennzeichnet, daß genannter Energieakkumulator (21, 24) die gesammte elektrische Energieversorung der genannten elektrischen Einrichtung (20) liefert.

12. System nach irgend einem der Ansprüche 1 bis 10,
dadurch gekennzeichnet, daß genannter Energieakkumulator (21, 24) an der elektrischen Versorgung der genannten elektrischen Einrichtung (20) teil hat.

13. System nach irgend einem der Ansprüche 1 bis 12,
dadurch gekennzeichnet, daß der optische Weg (3) der genannten Sendeeinrichtung (1) und genannten Empfangseinrichtung verbindet, zwei unabhängige Anordnungen von Lichtleitfasern (25, 26) enthält, die jeweils zur optischen Übermittlung besagter Informationen und der Übertragung der optischen Energie dienen.
